# EUROPÄISCHE PATENTSCHRIFT

(11) **EP 2 377 309 B1**
(45) Veröffentlichungstag und Bekanntmachung des Hinweises auf die Patenterteilung: **29.04.2015**
(21) Anmeldenummer: 09760126.4
(22) Anmeldetag: 27.10.2009
(51) Int. Cl.: H04N 5/32, G01N 23/223, G01T 1/29

(54) **SPEKTRALAUFLÖSENDE ELEKTRONISCHE RÖNTGENKAMERA**
ELECTRONIC X-RAY CAMERA WITH SPECTRAL RESOLUTION
CAMERA ELECTRONIQUE À RAYONS X AVEC RESOLUTION SPECTRALE

(30) Priorität: 27.10.2008 DE 102008053821; 16.02.2009 DE 102009009602
(43) Veröffentlichungstag der Anmeldung: 19.10.2011
(73) Patentinhaber: IFG - Institute For Scientific Instruments GmbH, 12489 Beriln (DE); PNSensor GmbH, 81739 München (DE)
(72) Erfinder: LANGHOFF, Norbert, 12526 Berlin (DE); BJEOUMIKHOV, Aniouar, 12526 Berlin (DE); SOLTAU, Heike, 80803 München (DE); HARTMANN, Robert, 82194 Gröbenzell (DE)
(74) Vertreter: Gulde & Partner
(86) Internationale Anmeldenummer: PCT/EP2009/064125
(87) Internationale Veröffentlichungsnummer: WO 2010/049409

(56) Entgegenhaltungen:
- EP-A1- 1 953 537
- WO-A1-2007/019053
- DE-A1- 3 735 296
- DE-A1- 10 303 438
- US-A1- 2008 159 479
- LECHNER P ET AL: "X-ray imaging spectrometers in present and future satellite missions", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NETHERLANDS, vol. 509, no. 1-3, 21 August 2003 (2003-08-21), pages 302-314, XP004446806, ISSN: 0168-9002, DOI: 10.1016/S0168-9002(03)01642-5
- D. E. NEWBURY: 'The new x-ray mapping: x-ray spectrum imaging above 100 kHz output count rate with the silicon drift detector', [Online] Bd. 12, Nr. 1, Februar 2006, Seiten 26 - 35 Gefunden im Internet: <URL:http://www.geology.wisc.edu/~johnf/g77 7/MM/Newbury-SDDmap2006.pdf> [gefunden am 2013-10-01]
- KEMNA A ET AL: "Low noise, large area CMOS x-ray image sensor for C.T. application", PROCEEDINGS OF IEEE SENSORS 2003 (IEEE CAT. NO.03CH37498) IEEE PISCATAWAY, NJ, USA; [IEEE INTERNATIONAL CONFERENCE ON SENSORS], IEEE, vol. CONF. 2, 22 October 2003 (2003-10-22) , page 1260, XP010690979, DOI: 10.1109/ICSENS.2003.1279147 ISBN: 978-0-7803-8133-9
- MURADIN A. KUMAKHOV: "X-ray capillary optics: history of development and present status", PROCEEDINGS OF SPIE, vol. 4155, 8 June 2000 (2000-06-08), pages 2-12, XP055111442, ISSN: 0277-786X, DOI: 10.1117/12.387859
- ROBERT A. AUSTIN ET AL: "High-pressure gas-scintillation-proportional counter for the focus of a hard-x-ray telescope", PROCEEDINGS OF SPIE, vol. 3765, 22 October 1999 (1999-10-22), pages 714-720, XP055111464, ISSN: 0277-786X, DOI: 10.1117/12.366553
- DALE E. NEWBURY: "The New X-ray Mapping: X-ray Spectrum Imaging above 100 kHz Output Count Rate with the Silicon Drift Detector", MICROSCOPY AND MICROANALYSIS, vol. 12, no. 01, 24 January 2006 (2006-01-24), pages 26-35, XP055147056, ISSN: 1431-9276, DOI: 10.1017/S143192760606020X

## Beschreibung

Die Erfindung betrifft eine Röntgenkamera, eine Verwendung der Röntgenkamera und ein Verfahren zur Aufnahme von Röntgenbildern mit den in den Oberbegriffen jeweiliger unabhängiger Ansprüche definierten Merkmalen.

Seit der Entdeckung der X-Strahlen durch Wilhelm Conrad Röntgen sind für den Nachweis dieser sehr kurzwelligen Strahlung unterschiedliche physikalische Effekte und Methoden genutzt worden. Dies reicht vom Nachweis von Röntgenstrahlung mit Hilfe von Fotofilmen über lonisationsdetektoren und Halbleiterdetektoren bis zu modernen Röntgenkameras unter Verwendung von Luminophoren und CCD-Matrizen. Diese Entwicklung wurde vor allen Dingen durch medizinische Applikationen in der Diagnostik vorangetrieben. In der Röntgenanalytik ist ein ähnlicher Trend über die Jahrzehnte feststellbar, wobei bezüglich der Röntgenphotonen-Energien, der Energieauflösung und der Intensitäten von anderen physikalischen und technischen Randbedingungen auszugehen war. Sowohl in der Röntgenfluoreszenzspektroskopie als auch in der Röntgendiffraktometrie hat sich in den letzten 20 Jahren die Tendenz zum Übergang von kompakten Einzeldetektorsystemen zu ortsauflösenden Detektoren vollzogen. Zunächst wurden bevorzugt Zeilenkameras eingesetzt, wogegen in den letzten 10 Jahren auch flächenhafte Detektoren zunehmend zum Einsatz kommen. Diese Nachweis- und Detektionssysteme beschränken sich auf die Erfassung der Ortsinformationen, d.h. auf einzelne Pixel, aus denen eine bildhafte Darstellung möglich wird sowie auf den Nachweis der Intensität der Strahlung für einen einzelnen Punkt (Pixel).

Der Gegenstand dieses Patentes ist die physikalische und technische Beschreibung einer neuartigen Röntgenfarbkamera, die mittels einer kompakten Röntgenoptik und eines zweidimensionalen pixelierten Halbleitersensors Orts-, Energie- und Zeitauflösung gleichzeitig ermöglicht.

Als ein für Röntgenstrahlen sensitives in einer Fläche ausgebildetes zweidimensionales Aufnahmeelement waren lange Zeit ausschließlich fotochemisch-sensitiv beschichtete Filme und neuerdings auch Halbleiterchips eingesetzt, wie in den 1999 in einer Erdbahn stationierten Röntgenteleskopen ein XMM-Newton (P. Lechner et al, "X-ray imaging spectrometers in present and future satellite missions) oder Chandra. Die Optik besteht hier aus aufwendigen großflächigen Spiegeln.

Bei nicht-bildgebenden Strahlenmessgeräten (wie Szintillationssonde, Ganzkörperzähler oder Zählrohr) wird die Strahlung häufig durch einfache konische Rohre oder Lamellen kollimiert. Bei einer Gammakamera sieht der Kollimator dagegen quasi wie ein Lochbrett aus, wobei die einzelnen "Löcher" durch die sogenannten Septen getrennt werden. Sie sorgen dafür, dass nur die senkrechten Strahlen durch den Kollimator gelassen werden, während schräg einfallende Photonen absorbiert werden. Die Septenlänge, die der Bauhöhe des Kollimators entspricht, und die Septenbreite bestimmen die Eignung für verschiedene Photonenenergien (nieder-, mittel- hoch- und ultrahochenergetisch). Vom Verhältnis Lochbreite zur Septenbreite hängt die Empfindlichkeit (Messausbeute) ab.

Das Schachtverhältnis (Septenlänge zu Lochbreite) bestimmt den erlaubten Eintrittswinkel und damit das räumliche Auflösungsvermögen. Dieses ist daher durch die (für die jeweilige Photonenenergie nötige) Septendicke begrenzt. Generell ist bei Kollimatoren immer ein Kompromiss zwischen Empfindlichkeit auf der einen und Auflösungsvermögen auf der anderen Seite nötig. Je kleiner und länger die Bohrungen sind, desto höher ist die Auflösung, jedoch umso schlechter die Empfindlichkeit, und umgekehrt.

Die Parallelloch-Kollimatoren erzeugen eine Parallelprojektion. Die Messausbeute ist von der Entfernung zum Objekt fast unabhängig, die Ortsauflösung verschlechtert sich hingegen mit zunehmendem Detektorabstand enorm. Parallelloch-Kollimatoren werden entweder aus Blei- oder Wolframblech hexagonal gefaltet und gelötet, oder in einem massiven Block gebohrt, oder gegossen. Die Bohrungen sind vorzugsweise mit strahlentransparentem Kunststoff ausgefüllt. Slanthole-Kollimatoren sind Parallelloch-Kollimatoren mit schräg verlaufenden Bohrungen, um z. B. an den Schultern vorbei näher am Kopf eines Patienten messen zu können. Divergierende Kollimatoren liefern ein vergrößertes Bild. Bei Fanbeam-Kollimatoren divergieren die Löcher nur in einer Raumrichtung. Da dabei ein größerer Kristallbereich die von einem kleinen Objekt ausgehende Strahlung aufnimmt, erhöht sich die Zählausbeute.

Die bekannten Pinhole-Kollimatoren funktionieren nach dem Prinzip der Lochkamera: Eine einzige "Pupille" liefert ein seitenverkehrtes und kopfstehendes Bild, dessen Abbildungsmaßstab stark vom Objektabstand abhängt. Sie werden zum Abbilden besonders kleiner strahlender Objekte (Handwurzelknochen, Versuchstiere, eventuell auch Schilddrüse) verwendet, da sie eine relativ zu den oben genannten Kollimatoren starke Vergrößerung erlauben. In neuerer Zeit kommen auch Multipinhole-Kollimatoren zum Einsatz, welche die Empfindlichkeit erhöhen, ohne die räumliche Auflösung zu vermindern.

Ortsempfindliche Detektoren für Röntgenstrahlung sind seit Langem bekannt. Das US Patent 3 772 521 "Radiation camera and delay line readout", in dem ein Proportionalzählrohr mit Anoden- und Kathodendrahtgittern ausgestattet ist, offenbart einen solchen. Durch die eintreffenden Röntgenphotonen wird hierbei ein elektrisches Signal erzeugt, das in Abhängigkeit von der Position über die jeweiligen Auslese-Drahtgitter über die entsprechende Zeitverzögerung der Signalübertragung lokalisiert wird. Eine verbesserte Version eines solchen Detektionssystems wird beispielsweise in der Offenlegungsschrift DE 37 35 296 A1 "Zweidimensionales Proportionalzählrohr zur ortsempfindlichen Messung von ionisierender Strahlung" beschrieben.

Weiterhin kommen Leuchtstofffolien und Speicherfolien als ortsauflösende Detektoren zum Einsatz. Diese Systeme und die entsprechenden erforderlichen Auslesevorrichtungen werden u. a. in den Patenten EP 0421632 A2 "Digital X-ray image processing apparatus and method" und EP 0667540 B1 "Auslesevorrichtung für photostimulierte Informationsträger" beschrieben. Allerdings sind diese Detektoren nicht so leistungsfähig wie CCD-Detektoren, die sowohl bzgl. der Auslesegeschwindigkeit als auch der Ortsauflösung deutlich bessere Charakteristiken aufweisen. Derartige Detektionssysteme, die insbesondere für diffraktometrische Aufnahmen in der Kristallografie Anwendung finden, existieren seit ihrer Entwicklung in den späten 80 Jahren des 20. Jahrhunderts. Allerdings werden bei diesen Detektionssystemen nur Intensitätsunterschiede registriert, d.h., es liegt ebenfalls nur eine Ortsauflösung vor.

Die US 5,491,738 beschreibt ein Röntgendifraktometer und die US 2007/0041492 A1 ein Röntgendifraktometermikroskop, wobei beide Lösungen jeweils Röntgenquelle und Röntgendetektor aufweisen. Keine der Lösungen enthält eine Röntgenkapillaroptik oder einen zweidimensionalen pixelierten Röntgendetektor.

Die für die erfindungsgemäße Röntgen-Farb-Kamera einsetzbare pn-CCD-Detektorstruktur wurde durch die Patentanmeldung DE 10 2005 025 641 A1 beschrieben.

Als optische Systeme sollen Polykapillarstrukturen zum Einsatz kommen, die als Parallelstrukturen bzw. konisch gestaltete Strukturen gebildet sind. Dazu existieren Veröffentlichungen aus den Jahren 1995: V.A. Arkadiev, A. Bzhaumikhov: "X-ray focusing by polycapillary arrays", Proceedings of SPIE Vol. 2515 (1995) 514-525.) bzw. 1998 A.A. Bzhaumikhov, N. Langhoff, J. Schmalz, R. Wedell, V.I. Beloglazov, N.F. Lebedev: "Polycapillary conic collimator for micro-XRF", Proceedings of SPIE Vol. 3444 (1998) 430-435. In Gegensatz zu den oben beschriebenen Röntgen-Kollimatoren aus Blei oder Wolfram für die harte Röntgenstrahlung, absorbieren die Polykapillarstrukturen aus Glas die niederenergetische Röntgenstrahlung, für die sie vorgesehen sind, nicht im erheblichen Maße, sondern bewirken eine Reflexion, d.h. die niederenergetische Röntgenstrahlung wird im Wesentlichen umgelenkt.

Mit der EP 1953537 A1 wird eine Vorrichtung zur Erfassung und/oder Leitung von Röntgenstrahlung unter Verwendung einer Röntgenoptik bekannt, bei welcher die Röntgenoptik Kapillare aufweist. Diese Röntgenoptik dient der Erfassung und Leitung der Röntgenstrahlung, nicht jedoch der Erzeugung von Bildern. Der verwendete Röntgendetektor hat keinerlei Raumauflösung.

Die Abhandlung "X-ray capillary optics history of development and present status" by M.A. Kumakhov beschreibt Röntgenlinsen aus Polykapillarstrukturen.

Die DE 103 03 438 A1 beschreibt ein Röntgenfluoreszenz-Spektrometer zur Analyse von Halbleiterproben. In dem Primärstrahl einer Röntgenquelle ist eine Röntgenkapillaroptik angeordnet, und eine herkömmliche Detektionseinheit dient zur Erfassung der Röntgenfluoreszenzstrahlung (ohne Ortsauflösung). Zusätzlich zu der Detektionseinheit ist eine optische Abbildungseinheit angeordnet, welche zum Beispiel mit einer CCD-Kamera die auf der Probenauflage platzierte Probe abbildet.

Die WO 2007/019053 A1 beschreibt ein Röntgenanalysesystem unter Verwendung von zwei Röntgenoptiken im Primärstrahlengang sowie eines herkömmlichen Detektorsystems (ohne Ortsauflösung).

Die Realisierung einer Röntgenkamera zur gleichzeitigen Orts-, Energie- und Zeitauflösung ist mit diesen beiden letztgenannten Vorrichtungen nicht möglich.

Der Erfindung liegt die Aufgabe zugrunde, eine praktisch einsetzbare elektronische Röntgenkamera zu schaffen, mit der auf eine einfache Weise Bildaufnahmen orts- und spektralaufgelöst erfasst werden können, verschiedene Abbildungsgrade realisierbar sind und somit eine gleichzeitige Spektralaufnahme niederenergetischer Röntgenstrahlung an jedem Bildaufnahmepunkt möglich ist.

Die vorliegende Erfindung geht nach einem vorrichtungstechnischen Aspekt von einer Röntgenkamera mit einem Kameragehäuse, einem wenigstens für Röntgenstrahlen sensitiven, in einer Fläche zweidimensional ausgebildeten, pixeliertem Aufnahmeelement und einem Röntgenobjektiv aus.

Die Aufgaben vorliegender Erfindung werden nach diesem vorrichtungstechnischen Aspekt dadurch gelöst, dass das Röntgen-Objektiv (10) eine Kapillarstruktur aufweist und das Aufnahmeelement als zweidimensionaler pixelierter Halbleitersensor zur gleichzeitigen Orts-, Energie- und Zeitauflösung, beispielsweise als ein pn-CCD (Charge Coupled Device) oder ein monolithisches zweidimensionales SDD-Feld (Silicium Drift Detector) oder ein DEPFET-Makropixelfeld ausgebildet ist. Insbesondere ein pn-CCD ist in der Lage, gleichzeitig und mit jedem aus einer auf ihm angeordneten Vielzahl von Bildpixelsensoren die jeweils ortsbezogene Röntgenstrahlung zu erfassen und spektroskopisch zu analysieren. Dadurch entfällt die Notwendigkeit, in einer entsprechend länger dauernden Strahlenerfassungsaktion mit nur einem Sensor ein Bild punktweise nacheinander zu scannen. Insbesondere der hier verwendete pn-CCD-Bildsensor weist eine so hohe Intensitätsauflösung auf, dass hierdurch sowohl die Erfassung der Anzahl der eintreffenden einzelnen Photonen als auch deren Energiebeträge möglich ist.

Die erfindungsgemäße Röntgenkamera erreicht weitere Vorteile, wenn sie mit einem Kameraverschluss ausgestattet ist, der manuell oder von einer elektronischen Steuerung betätigbar ist.

Die Gesamtintensität der in die Kamera für eine Aufnahme eintreffenden Röntgenstrahlung lässt sich besonders vorteilhaft einstellen, wenn die Röntgenkamera mit einer Blende ausgestattet ist, deren Blendenöffnung vorgegeben und/oder vorgebbar ist.

Das Röntgenobjektiv weist vorzugsweise ein Objektivgehäuse auf, in welchem eine Kapillarstruktur für die Röntgenstrahlen angeordnet ist. Diese Kapillarstruktur ist ferner in bevorzugten Ausgestaltungen als ein parallel fokussierender Kollimator oder ein vergrößernd oder verkleinernd fokussierender Kollimator ausgebildet.

Die erfindungsgemäße Röntgenkamera lässt sich besonders praktisch handhaben, wenn das Röntgenobjektiv eine Strahleneintritts- und eine Strahlenaustrittsöffnung aufweist, wobei jede Öffnung mit einem für eine niederenergetische Röntgenstrahlung durchlässigen Fenster gasdicht verschlossen ist. Der Innenraum des Röntgenobjektivs ist vorzugsweise mit einem Gas gefüllt. Das Gas verhindert die Bildung von Wasserkondensat bzw. eine Vereisung. Als ein geeignetes Gas kommen Stickstoff oder Helium oder eine Gasmischung von beiden in Frage.

Um eine vorteilhafte Austauschbarkeit der Röntgenobjektive zu gewährleisten, ist das Röntgenobjektiv mit dem Kameragehäuse vorzugsweise mit Hilfe eines trennbaren Gewinde- oder eines Bajonettverschlusses verbunden.

Gemäß einer weiteren bevorzugten Ausgestaltung der erfindungsgemäßen Röntgenkamera ist das Kameragehäuse gasdicht ausgebildet und weist eine Strahleneintrittsöffnung auf, die mit einem für eine niederenergetische Röntgenstrahlung durchlässigen Kamerafenster gasdicht verschlossen ist. Das Kamerafenster verhindert dadurch das Entweichen des in ihm eingeschlossenen Gases, mit dem auch der Innenraum des Kameragehäuses in einer bevorzugten Ausgestaltung der vorliegenden Erfindung gefüllt ist. Auch in diesem Fall wie zuvor für das Röntgenobjektiv ist es von Vorteil, wenn als ein Gas Stickstoff oder Helium oder eine Gasmischung von beiden verwendet wird.

Das Aufnahmeelement der erfindungsgemäßen Röntgenkamera ist durch eine Kühlvorrichtung auf eine Temperatur im Bereich von +20 °C bis -60 °C abgekühlt, die der Betriebstemperatur des Aufnahmeelementes entspricht, wobei die Kühlvorrichtung als ein Peltier-Element ausgebildet ist. Das Peltier-Element lässt sich vorteilhaft einfach elektrisch ansteuern. Die warme Seite des Peltier-Elements gibt die anfallende Wärme an eine Gehäuserückwand, an der vorzugsweise wenigstens ein Kühlkörper mit oder ohne einem Gebläse angeordnet ist.

Wenigstens eines von den Fenstern des Röntgenobjektives und/oder das Kamerafenster ist vorzugsweise aus einem für die niederenergetische Röntgenstrahlung besonders durchlässigen Material wie dem Beryllium oder einer Polymerfolie ausgebildet.

Die erfindungsgemäße Röntgenkamera weist in weiteren bevorzugten Ausgestaltungen einen vorzugsweise digitalen Datenspeicher zum Speichern aufgenommener Bilddaten auf, wobei der Datenspeicher innerhalb oder außerhalb des Kameragehäuses angeordnet ist.

Um die Weiterverarbeitung aufgenommener Bilddaten zu ermöglichen, ist es von Vorteil, wenn die erfindungsgemäße Röntgenkamera ferner eine Datenübertragungsschnittstelle aufweist, mit der ein Datenaustausch mit einer externen Bildverarbeitungsvorrichtung, insbesondere einem Computer, ausführbar ist.

Die Aufgaben der vorliegenden Erfindung sind ferner nach einem verwendungs-technischen Aspekt mit einer Röntgenkamera nach einer der vorher beschriebenen Ausgestaltungen zum Erzeugen monochromatischer und/oder spektraler mehrfarbiger digitaler Röntgenbildaufnahmen gelöst.

Nach einem weiteren verfahrenstechnischen Aspekt vorliegender Erfindung geht die vorliegende Erfindung von einem Verfahren zur Aufnahme zweidimensional aufgelöster, ortsbezogener Abbildungen im niederenergetischen Röntgenstrahlenbereich mit Hilfe eines wenigstens für Röntgenstrahlung sensitiven Aufnahmeelementes aus, wobei das Aufnahmeelement eine Vielzahl geordneter Bildpixelsensoren aufweist.

Die erfindungsgemäßen Aufgaben werden nach diesem verfahrenstechnischen Aspekt der vorliegenden Erfindung dadurch gelöst, dass mit jedem Bildpixelsensor eine Einzelphotonenerfassung und eine Bestimmung der zugehörigen Photonenenergie der auf dieses Bildpixelsensor auftreffenden Röntgenstrahlung ausgeführt wird. Gemäß einer weiteren Ausgestaltung des erfindungsgemäßen Verfahrens wird ausgehend von der Einzelphotonenerfassung und der Bestimmung der Photonenergie ein Strahlungsspektrum der auf das jeweilige einzelne Bildpixelsensor auftreffenden Röntgenstrahlung ermittelt. Hierdurch wird am Ort eines jeden Bildpixelsensors des Aufnahmeelementes die auftreffende Röntgenstrahlung nach ihrer Wellenlänge und der zugehörigen Intensität erfasst.

Das erfindungsgemäße Verfahren verwendet vorzugsweise ein für die Röntgenstrahlung sensitives zweidimensionales pixeliertes Aufnahmeelement wie ein pn-CCD oder ein monolithisches SDD-Feld oder ein DEPFET-Makropixelfeld. Lediglich als Beispiel kommt ein pn-CCD mit ca. 256 x 256 Pixeln mit einer Pixelgröße von ca. 50 x 50 µm² zum Einsatz in der erfindungsgemäßen Röntgenkamera.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:
- Figur 1: eine schematische Querschnittansicht einer erfindungsgemäßen Ausgestaltung einer Röntgenkamera;
- Figur 2: eine schematische perspektivische Ansicht der erfindungsgemäßen Ausgestaltung der Röntgenkamera;
- Figur 3: eine schematische Explosionsansicht der erfindungsgemäßen Ausgestaltung der Röntgenkamera;
- Figur 4A: eine perspektivische Ansicht einer Kapillarstruktur, die als ein vergrößernd fokussierender Kollimator ausgeführt ist;
- Figur 4B: eine perspektivische Ansicht einer Kapillarstruktur, die als ein verkleinernd fokussierender Kollimator ausgeführt ist; und
- Figur 4C: eine perspektivische Ansicht einer Kapillarstruktur, die als ein parallel fokussierender Kollimator ausgeführt ist.

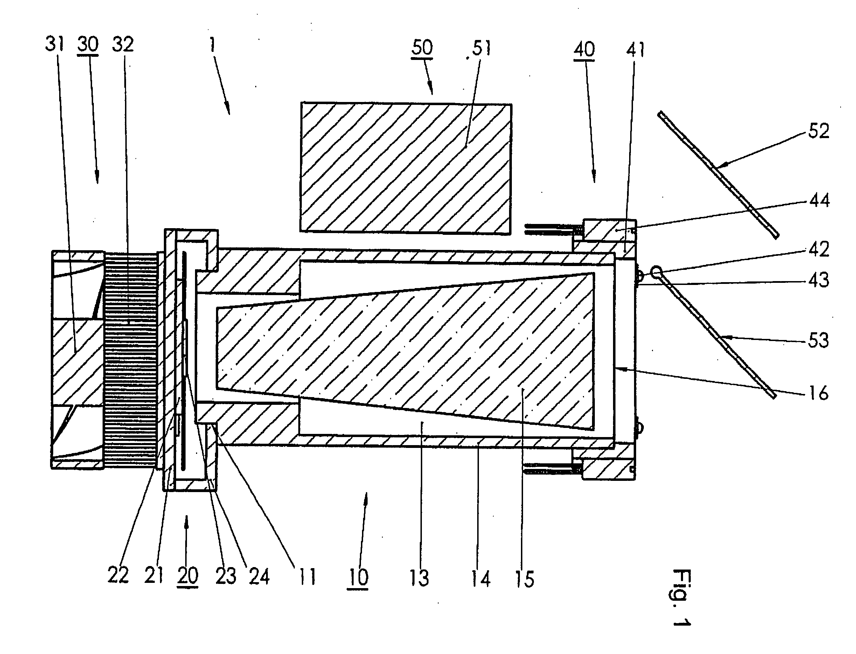

Figur 1 zeigt eine schematische Querschnittsansicht einer erfindungsgemäßen Ausgestaltung einer Röntgenkamera 1. Die Röntgenkamera 1 weist ein Kameragehäuse 20 und ein Röntgenobjektiv 10 auf. Das Kameragehäuse 20 und das Röntgenobjektiv 10 sind miteinander vorzugsweise mit Hilfe eines Gewinde- oder eines Bajonettverschlusses trennbar verbunden, wodurch eine einfache Austauschbarkeit des Röntgenobjektivs 10 ermöglicht ist. Das Röntgenobjektiv 10 weist ein Objektivgehäuse 14 auf, in welchem eine Kapillarstruktur 15 angeordnet ist. Die Kapillarstruktur 15 weist in vorliegender Ausgestaltung eine verjüngte Gestalt auf, und entspricht in dieser Gestalt einem verkleinernd fokussierenden Kollimator.

Im Kameragehäuse 20 ist ein Aufnahmeelement oder ein Bildsensor 23 und hinter ihm ein als ein Kühlelement dienendes Peltier-Element 22 angeordnet. Das Peltier-Element 22 ist dazu vorgesehen, das Aufnahmeelement 23 auf eine Temperatur nahe Raumtemperatur abzukühlen. Der Innenraum des Kameragehäuses 20 ist vorzugsweise mit einem Edelgas wie Helium oder Stickstoff gefüllt, um einer Vereisung entgegenzuwirken.

In folgender Ausgestaltung wird die Rückwand des Kameragehäuses 20 zusätzlich mit einer Kühlvorrichtung 30 gefüllt. Diese Kühlvorrichtung 30 weist einen Kühlkörper 32 und ein Gebläse 31 auf. Die Röntgenstrahlung tritt in das Röntgenobjektiv 10 durch eine am vorderen Ende des Röntgenobjektivs 10 vorhandene Strahleneintrittsöffnung 16 in den Kollimator 15 ein. Ein Teil der eintreffenden Röntgenstrahlung, der sich entlang der Kapillaröffnungen des Kollimators 15 ausbreitet, erreicht die Strahleneintrittsöffnung 25 des Kameragehäuses 20 und trifft auf das Aufnahmeelement 23 auf.

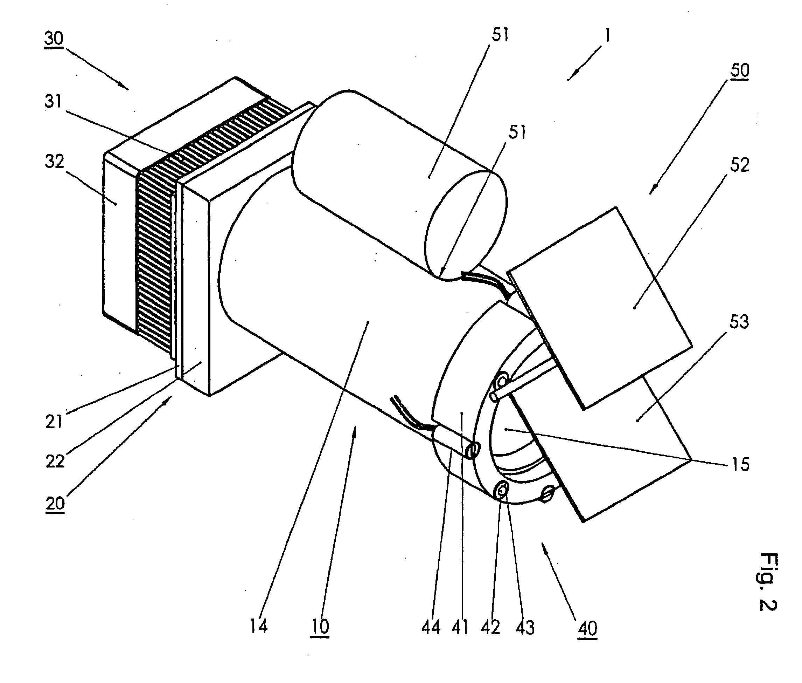

Figur 2 zeigt eine schematisch-perspektivische Ansicht der erfindungsgemäßen Ausgestaltung der Röntgenkamera 1 aus der Figur 1.

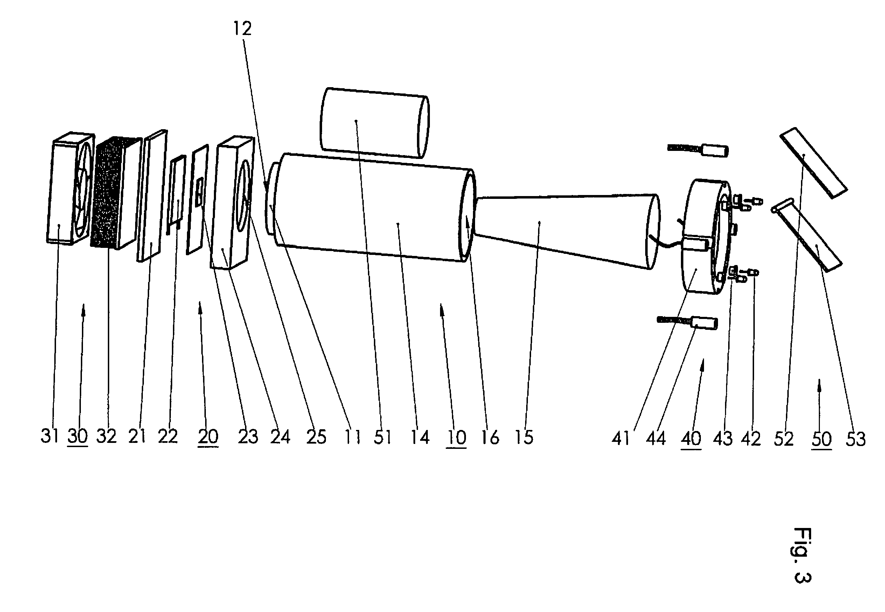

Figur 3 zeigt eine schematische Explosionsansicht der erfindungsgemäßen Ausgestaltung der Röntgenkamera 1 aus den Figuren 1 und 2.

In der Reihenfolge von links nach rechts ist ein Gebläse 31 an Kühlkörper 32, eine Gehäuserückwand 21, ein Peltier-Element 22, ein Aufnahmeelement 23, eine Gehäuseschale 24 mit einer Strahleneintrittsöffnung 25, ein Objektivgehäuse 14 und ein Kollimator 15 dargestellt. Schematisch ist ein Gewinde- oder ein Bajonettverschluss 11 des Objektivgehäuses 14 offenbart.

Das Aufnahmeelement 23 ist als ein rechteckiges Element erkennbar und ist erfindungsgemäß ein pn-CCD-Halbleiterchip, der beispielsweise ca. 256 x 256 einzelne Bildaufnahmepixel aufweist, wobei die Pixelgröße beispielsweise 50 x 50 µm² beträgt. Der vorzugsweise verwendete pn-CCD Halbleiter-Bildsensor weist vorzugsweise zwei integrierte Aufnahmemodule auf und verwendet vorzugsweise äußerst schnell agierende Avalanche-Verstärker zur Signalverstärkung.

In einer bevorzugten Ausgestaltung der vorliegenden Erfindung ist das Kameragehäuse 20 mit Stickstoff oder Helium gefüllt, um eine Vereisung durch Restwassermoleküle innerhalb des Gehäuses zu verhindern. Damit das Röntgenobjektiv 10 von dem Kameragehäuse 20 durch einen Gewinde- oder Bajonettverschluss abtrennbar sein kann, ist an dem Kameragehäuse an der Strahleneintrittsöffnung 25 ein für die niederenergetische Röntgenstrahlung durchlässiges Fenster (nicht dargestellt) angeordnet. Dieses Fenster ist beispielsweise aus Beryllium oder einer Polymerfolie ausgebildet.

Figur 3 zeigt eine schematische Explosionsansicht der erfindungsgemäßen Ausgestaltung der Röntgenkamera 1 nach Figur 1 und 2. Der Innenraum 13 des Röntgenobjektivs 10 beherbergt einen im vorliegenden Fall verkleinernd fokussierenden Kollimator 15. Aus gleichem Grund wie für das Kameragehäuse 20 ist der Innenraum 13 des Röntgenobjektivs 10 mit Stickstoff oder Helium gefüllt, um eine Vereisung durch Restwasser innerhalb des Gehäuses zu verhindern.

Damit die Gasbefüllung in dem Innenraum 13 des Röntgenobjektivs 10 auch beim Austauschen des Röntgenobjektivs 10 nicht entweichen kann, ist sowohl die Strahleneintrittsöffnung 16 des Objektivgehäuses 14 als auch Strahlenaustrittsöffnung 12 mit jeweils einem auch für niederenergetische Röntgenstrahlung durchlässigen Fenster versehen. Auch diese Fenster können beispielsweise aus Beryllium oder eine Polymerfolie ausgebildet werden.

Ein schematisch dargestellter Gewinde- oder Bajonettverschluss 11 ermöglicht ein einfaches Austauschen des Röntgenobjektivs gegen ein anderes, das beispielsweise eine andere Röntgenoptik enthält. Dadurch kann die erfindungsgemäße Röntgenkamera 1 auf eine einfache Art und Weise an eine technische Aufgabe angepasst werden.

Zur Visualisierung und Dokumentation der Probe ist, wie in Fig. 1 dargestellt, der Röntgenfarbkamera 1 eine als optisches Kamerasystem 50 ausgebildete Beobachtungseinrichtung im optisch sichtbaren Bereich zugeordnet. Dazu dient eine digitale Farbkamera 51. Deren optische Achse wird mit einem röntgendurchlässigen (oder mechanisch klappbaren) Spiegel 53 in die Beobachtungsrichtung der Röntgenfarbkamera 1 oder der Bestrahlungsrichtung der Röntgenröhre umgelenkt. Im Strahlengang zu der digitalen Farbkamera befindet sich ein starrer Umlenkspiegel 52. Trägermaterialien für röntgendurchlässige im Sichtbaren reflektierende Spiegel sind Polyamid, Beryllium, Mylar oder Diamant.

Zur Beleuchtung 40 der Probe sind an einem Beleuchtungsträger 41 LED-Elemente 42 über LED-Fassungen 43 angeordnet.

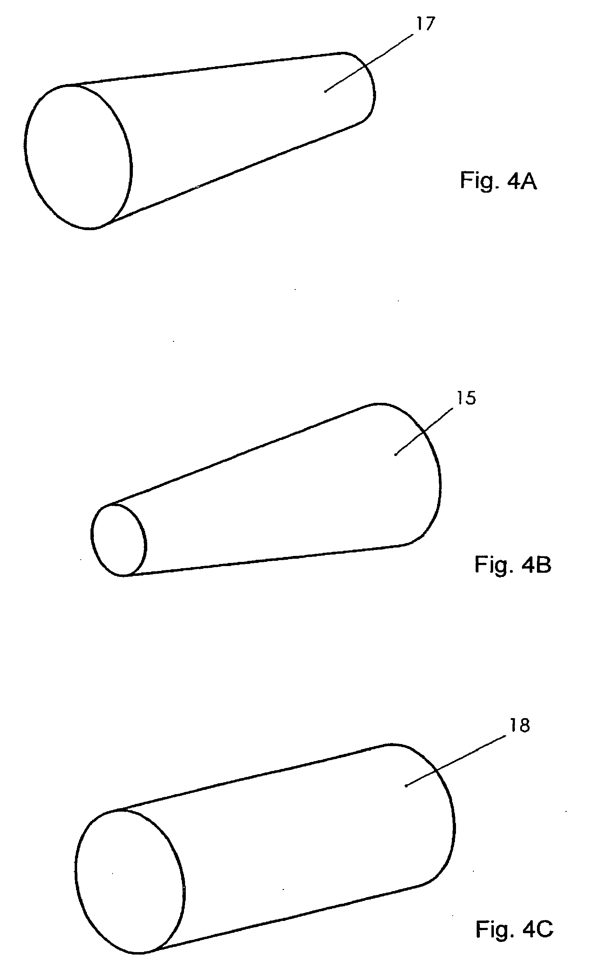

Figur 4A zeigt eine perspektivische Ansicht einer Kapillarstruktur 17, die als ein vergrößernd fokussierender Kollimator 17 ausgeführt ist. Figur 4B zeigt eine perspektivische Ansicht einer Kapillarstruktur 15, die als ein verkleinernd fokussierender Kollimator 15 ausgeführt ist. Figur 4C zeigt schließlich eine perspektivische Ansicht einer Kapillarstruktur 18, die als ein parallel fokussierender Kollimator 18 ausgeführt ist.

### Bezugszeichenliste

- 1: Röntgenkamera
- 10: Röntgenobjektiv
- 11: Gewinde- oder Bajonettverschluss
- 12: Strahlenaustrittsöffnung
- 13: Innenraum
- 14: Objektivgehäuse
- 15: Kapillarstruktur, verkleinernd abbildender Kollimator
- 16: Strahleneintrittsöffnung
- 17: Kapillarstruktur, vergrößernd abbildender Kollimator
- 18: Kapillarstruktur, parallel abbildender Kollimator
- 20: Kameragehäuse
- 21: Gehäuserückwand
- 22: Peltier-Element
- 23: Aufnahmeelement, pn-CCD
- 24: Gehäuseschale
- 25: Strahleneintrittsöffnung
- 30: Kühlvorrichtung
- 31: Gebläse
- 32: Kühlkörper
- 40: Beleuchtung
- 41: Beleuchtungsträger
- 42: LED-Element
- 43: LED-Fassung
- 44: Laser (Messbereichsmarkierung)
- 50: optisches Kamerasystem
- 51: digitale Farbkamera
- 52: starrer Umlenkspiegel
- 53: Klappspiegel oder röntgendurchlässige Spiegelfolie

## Patentansprüche

1. Röntgenkamera (1) mit einem Kameragehäuse (20), einem für Röntgenstrahlen sensitiven Aufnahmeelement (23) und einem Röntgenobjektiv (10),
**dadurch gekennzeichnet, dass**
das Röntgenobjektiv (10) eine Kapillarstruktur (15, 17, 18) aufweist, die Kapillarstruktur (15, 17, 18) als eine parallel abbildende Polykapillarstruktur (18) oder eine vergrößernd oder verkleinernd abbildende Polykapillarstruktur (17, 15)
und das Aufnahmeelement (23) als zweidimensionaler pixelierter Halbleitersensor zur gleichzeitigen Orts-, Energie- und Zeitauflösung ausgebildet ist und das Röntgenobjektiv (10) mit dem Kameragehäuse (20) trennbar verbunden ist.

2. Röntgenkamera nach Anspruch 1,
**dadurch gekennzeichnet, dass** das Aufnahmeelement (23) als ein pn-CCD (Charge Coupled Device) oder ein SDD-Feld (Silicium Drift Detector) oder ein DEPFET-Makropixelfeld ausgebildet ist.

3. Röntgenkamera nach Anspruch 1 oder 2,
**dadurch gekennzeichnet, dass**
die Röntgenkamera (1) mit einem Kamera-Verschluss ausgestattet ist, der manuell oder von einer elektronischen Steuerung betätigbar ist und/oder mit einer Blende deren Blendenöffnung vorgegeben oder vorgebbar ist.

4. Röntgenkamera nach einem der vorhergehenden Ansprüche,
**dadurch gekennzeichnet, dass**
das Röntgenobjektiv (10) ein Objektivgehäuse (14) aufweist, in welchem die Kapillarstruktur (15, 17, 18) für die Röntgenstrahlen angeordnet ist.

5. Röntgenkamera nach einem der vorhergehenden Ansprüche,
**dadurch gekennzeichnet, dass**
das Röntgenobjektiv (10) eine Strahleneintritts- (16) und eine Strahlenaustrittsöffnung (12) aufweist, wobei jede Öffnung mit einem für eine niederenergetische Röntgenstrahlung durchlässigen Fenster gasdicht verschlossen ist und/oder das Röntgen-Objektiv (10) mit dem Kameragehäuse (20) mithilfe eines trennbaren Gewinde- oder eines Bajonettverschlusses (11) verbunden ist.

6. Röntgenkamera nach einem der vorhergehenden Ansprüche,
**dadurch gekennzeichnet, dass**
der Innenraum (13) des Röntgenobjektives (10) mit einem Gas gefüllt ist und das Gas Stickstoff oder Helium oder eine Gasmischung von beiden ist.

7. Röntgenkamera nach einem der vorhergehenden Ansprüche,
**dadurch gekennzeichnet, dass**
das Kameragehäuse (20) gasdicht ausgebildet ist und eine Strahleneintrittsöffnung (25) aufweist, die mit einem für eine niederenergetische Röntgenstrahlung durchlässigen Kamera-Fenster gasdicht verschlossen ist und/oder dass der Innenraum des Kameragehäuses (20) mit einem Gas gefüllt ist, wobei das Gas Stickstoff oder Helium oder eine Gasmischung von beiden ist.

8. Röntgenkamera nach einem der vorhergehenden Ansprüche,
**dadurch gekennzeichnet, dass**
das Aufnahmeelement (23) durch eine Kühlvorrichtung (22) auf eine Temperatur im Bereich von +20 °C bis -60 °C abgekühlt ist, wobei die Kühlvorrichtung (22) als ein Peltierelement (22) ausgebildet ist.

9. Röntgenkamera nach einem der vorhergehenden Ansprüche,
**dadurch gekennzeichnet, dass**
an dem Kameragehäuse (20) wenigstens ein Kühlkörper (32) mit oder ohne einem Gebläse (31) angeordnet ist und/oder dass wenigstens eines von den Fenstern des Röntgenobjektives (10) und/oder das Kamera-Fenster aus Beryllium oder einem dünnen Material, transparent für niederenergetische Strahlung ausgebildet ist.

10. Röntgenkamera nach einem der vorhergehenden Ansprüche,
**dadurch gekennzeichnet, dass**
ein, vorzugsweise digitaler Datenspeicher zum Speichern aufgenommener Bilddaten vorgesehen ist, wobei der Datenspeicher innerhalb oder außerhalb des Kameragehäuses (20) angeordnet ist und/oder eine Bildverarbeitungseinheit zum Bearbeiten aufgenommener Bilddaten vorgesehen ist, wobei die Bildverarbeitungseinheit innerhalb oder außerhalb des Kameragehäuses (20) angeordnet ist und/oder eine Datenübertragungsschnittstelle vorgesehen ist, mit der ein Datenaustausch mit einer externen Bildverarbeitungsvorrichtung, insbesondere einem Computer ausführbar ist.

11. Röntgenkamera nach einem der vorhergehenden Ansprüche,
**dadurch gekennzeichnet, dass**
zur Visualisierung und Dokumentation der Probe eine als optisches Kamerasystem (50) ausgebildete Beobachtungseinrichtung angeordnet ist, wobei die Beobachtungseinrichtung eine digitale Farbkamera (51) ist und die optische Achse der Farbkamera (51) über Spiegel (52, 53) umlenkbar ist.

12. Röntgenkamera nach einem der vorhergehenden Ansprüche,
**dadurch gekennzeichnet, dass**
zur Beleuchtung (40) der Probe LED-Elemente (42) angeordnet sind.

13. Verwendung der Röntgenkamera (1) nach einem der vorhergehenden Ansprüche zum Erzeugen monochromatischer und/oder spektraler mehrfarbiger digitaler RöntgenBildaufnahmen.

14. Verfahren zur Aufnahme von Röntgenbildern mittels einer Röntgenkamera, gemäß einem der vorangehenden Ansprüche 1 bis 12.

15. Verfahren nach Anspruch 14,
**dadurch gekennzeichnet, dass**
mit jedem Bildpixelsensor des Halbleitersensors eine Einzelphotonenerfassung und eine Bestimmung der zugehörigen Photonen-Energie der auf diesen Bildpixelsensor auftreffenden Röntgenstrahlung ausgeführt wird und/oder ausgehend von der Einzelphotonenerfassung und der Bestimmung der Photonen-Energie ein Strahlungs-Spektrum der auf die jeweiligen einzelnen Bildpixelsensoren auftreffenden Röntgenstrahlung ermittelt wird.

## Claims

1. An x-ray camera (1) with a camera housing (20), an image pickup element (23) sensitive to x-rays and an x-ray objective (10),
**characterized in that**
the x-ray objective (10) has a capillary structure (15, 17, 18), the capillary structure (15, 17, 18) is formed as a parallel-imaging polycapillary structure (18) or a magnifying or demagnifying polycapillary structure (17, 15)
and the image pickup element (23) is formed as a two-dimensional pixelated semiconductor sensor for simultaneous spatial, energy and time resolution and the x-ray objective (10) is detachably connected with the camera housing (20).

2. The x-ray camera according to claim 1,
**characterized in that**
the image pickup element (23) is constructed as a pn-CCD (Charge Coupled Device) or an SDD (silicon drift detector) field or a DEPFET macropixel field.

3. The x-ray camera according to claim 1 or 2,
**characterized in that**
the x-ray camera (1) is provided with a camera shutter which can be operated manually or by an electronic control and/or with a diaphragm whose diaphragm opening is predetermined or can be predetermined.

4. The x-ray camera according to any one of the preceding claims,
**characterized in that**
the x-ray objective (10) has an objective housing (14) in which the capillary structure (15, 17, 18) for the x-rays is arranged.

5. The x-ray camera according to any one of the preceding claims,
**characterized in that**
the x-ray objective (10) has a beam entrance opening (16) and a beam exit opening (12), wherein each opening is sealed gas-tight with a window which is transparent to low-energy x-ray radiation and/or the x-ray objective (10) is connected with the camera housing (20) by way of a separable threaded lock or a bayonet lock (11).

6. The x-ray camera according to any one of the preceding claims,
**characterized in that**
the interior space (13) of the x-ray objective (10) is filled with a gas and the gas is nitrogen or helium or a gas mixture of both.

7. The x-ray camera according to any one of the preceding claims,
**characterized in that**
the camera housing (20) is constructed gas-tight and has a beam entrance opening (25) which is sealed gas-tight with a camera window which is transparent to low-energy x-ray radiation and/or that the interior space of the camera housing (20) is filled with a gas, wherein the gas is nitrogen or helium or a gas mixture of both.

8. The x-ray camera according to any one of the preceding claims,
**characterized in that**
the pickup element (23) is cooled by a cooling device (22) to a temperature within the range from +20°C to -60°C, wherein the cooling device (22) is constructed as a Peltier element (22).

9. The x-ray camera according to any one of the preceding claims,
**characterized in that**
at least one heat sink (32) with or without a blower (31) is arranged on the camera housing (20) and/or that at least one of the windows of the x-ray objective (10) and/or the camera window is made of beryllium or of a thin material transparent to low-energy radiation.

10. The x-ray camera according to any one of the preceding claims,
**characterized in that**
a, preferably digital, data storage is provided for storing recorded image data, wherein the data storage is arranged inside or outside the camera housing (20) and/or an image processing unit is provided for processing recorded image data, wherein the image processing unit is arranged inside or outside the camera housing (20) and/or a data transmission interface is provided by means of which data exchange with an external image processing device, in particular a computer, can be performed.

11. The x-ray camera according to any one of the preceding claims,
**characterized in that**
an observation unit configured as an optical camera system (50) is arranged for visualizing and documenting the sample, wherein the observation unit is a digital color camera (51) and the optical axis of the color camera (51) can be deflected via mirrors (52, 53).

12. The x-ray camera according to any one of the preceding claims,
**characterized in that**
LED elements (42) are arranged for illuminating (40) the sample.

13. The use of the x-ray camera (1) according to any one of the preceding claims for producing monochromatic and/or spectrally multi-colored digital x-ray images.

14. A method for recording x-ray images by means of an x-ray camera according to any one of the preceding claims 1 to 12.

15. The method according to claim 14,
**characterized in that**
with each pixel sensor of the semiconductor sensor a single photon capture and a determination of the associated photon energy of the x-ray radiation incident on said image pixel sensor is performed and/or starting from the single photon capture and the determination of the photon energy a radiation spectrum of the x-ray radiation incident on the respective individual image pixel sensors is determined.

## Revendications

1. Caméra à rayons X (1) avec un boîtier de caméra (20), un élément d'enregistrement (23) sensible aux rayons X et un objectif de rayons X (10),
**caractérisée en ce que**
l'objectif de rayons X (10) présente une structure capillaire (15, 17, 18), la structure capillaire (15, 17, 18) est constituée en tant que structure polycapillaire (18) à représentation parallèle ou structure polycapillaire (15, 17) à représentation grossissante ou réductrice,
et l'élément d'enregistrement (23) est constitué en tant que capteur à semi-conducteurs pixellisé à deux dimensions pour la résolution simultanée spatiale, en énergie et temporelle, et l'objectif de rayons X (10) est raccordé de façon séparable au boîtier de caméra (20).

2. Caméra à rayons X selon la revendication 1,
**caractérisée en ce que**
l'élément d'enregistrement (23) est constitué en tant que pn-CCD (Charge Coupled Device) ou champ SDD (Silicium Drift Detector) ou champ de macropixels DEPFET.

3. Caméra à rayons X selon la revendication 1 ou 2,
**caractérisée en ce que**
la caméra à rayons X (1) est équipée d'un obturateur de caméra qui peut être actionné manuellement ou par une commande électronique et/ou avec un diaphragme dont l'ouverture de diaphragme est prédéfinie ou peut être prédéfinie.

4. Caméra à rayons X selon une des revendications précédentes,
**caractérisée en ce que**
l'objectif de rayons X (10) présente un boîtier d'objectif (14) dans lequel est disposée la structure capillaire (15, 17, 18) pour les rayons X.

5. Caméra à rayons X selon une des revendications précédentes,
**caractérisée en ce que**
l'objectif de rayons X (10) présente une ouverture d'entrée des rayons (16) et une ouverture de sortie des rayons (12), chaque ouverture étant obturée de façon étanche aux gaz avec une fenêtre perméable au rayonnement X de basse énergie et/ou l'objectif de rayons X (10) étant raccordé au boîtier de caméra (20) à l'aide d'une fermeture filetée ou à baïonnette (11) séparable.

6. Caméra à rayons X selon une des revendications précédentes,
**caractérisée en ce que**
l'espace intérieur (13) de l'objectif de rayons X (10) est rempli d'un gaz, et **en ce que** le gaz est de l'azote ou de l'hélium ou un mélange gazeux de ceux-ci.

7. Caméra à rayons X selon une des revendications précédentes,
**caractérisée en ce que**
le boîtier de caméra (20) est réalisé de façon étanche aux gaz et présente une ouverture d'entrée des rayons (25) qui est obturée de façon étanche aux gaz avec une fenêtre de caméra perméable au rayonnement X de basse énergie, et/ou **en ce que** l'espace intérieur du boîtier de caméra (20) est rempli d'un gaz, le gaz étant de l'azote ou de l'hélium ou un mélange gazeux de ceux-ci.

8. Caméra à rayons X selon une des revendications précédentes,
**caractérisée en ce que**
l'élément d'enregistrement (23) est refroidi par un dispositif de refroidissement (22) à une température dans une plage de + 20 °C à - 60 °C, le dispositif de refroidissement (22) étant constitué en tant qu'élément Peltier (22).

9. Caméra à rayons X selon une des revendications précédentes,
**caractérisée en ce que**,
sur le boîtier de caméra (20), il est disposé au moins un dissipateur de chaleur (32) avec ou sans ventilateur (31), et/ou **en ce qu'**au moins une des fenêtres de l'objectif de rayons X (10) et/ou la fenêtre de caméra est constituée en béryllium ou en un matériau mince, transparent au rayonnement de basse énergie.

10. Caméra à rayons X selon une des revendications précédentes,
**caractérisée en ce**
**qu'**une mémoire de données, de préférence numérique, est prévue pour le stockage de données d'images enregistrées, la mémoire de données étant disposée à l'intérieur ou à l'extérieur du boîtier de caméra (20), et/ou une unité de traitement d'images est prévue pour le traitement des données d'images enregistrées, l'unité de traitement d'images étant disposée à l'intérieur ou à l'extérieur du boîtier de caméra (20), et/ou une interface de transmission de données est prévue, avec laquelle un échange de données peut être exécuté avec un dispositif de traitement d'images externe, en particulier un ordinateur.

11. Caméra à rayons X selon une des revendications précédentes,
**caractérisée en ce que**,
pour la visualisation et la documentation de l'échantillon, il est disposé un dispositif d'observation constitué en tant que système de caméra (50) optique, le dispositif d'observation étant une caméra couleur (51) numérique et l'axe optique de la caméra couleur (51) pouvant être dévié par le biais de miroirs (52, 53).

12. Caméra à rayons X selon une des revendications précédentes,
**caractérisée en ce que**
des éléments à LED (42) sont disposés pour l'éclairage (40) de l'échantillon.

13. Utilisation de la caméra à rayons X (1) selon une des revendications précédentes pour la production d'enregistrements de radiographies numériques monochromes et/ou polychromes spectrales.

14. Procédé d'enregistrements de radiographies au moyen d'une caméra à rayons X selon une des revendications précédentes 1 à 12.

15. Procédé selon la revendication 14,
**caractérisé en ce que**,
avec chaque capteur de pixels d'image du capteur à semi-conducteurs, une détection de photons individuels et une définition de l'énergie photonique correspondante du rayonnement X heurtant ce capteur de pixels d'image sont réalisées et/ou, en partant de la détection de photons individuels et de la définition de l'énergie photonique, un spectre de rayonnement du rayonnement X heurtant les différents capteurs de pixels d'image respectifs est déterminé.
